(19) Europäisches Patentamt
European Patent Office
Office européen des brevets

(11) **EP 3 001 528 A1**

(12) **EUROPEAN PATENT APPLICATION**

(43) Date of publication:
**30.03.2016 Bulletin 2016/13**

(51) Int Cl.:
***H02J 3/32*** (2006.01)     ***H02J 3/38*** (2006.01)
***F03B 13/26*** (2006.01)

(21) Application number: **14186820.8**

(22) Date of filing: **29.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Dolch, Philipp**
  **91785 Pleinfeld (DE)**
• **Wolfrum, Philipp**
  **81539 München (DE)**
• **Wurster, Stefan**
  **81379 München (DE)**

(54) **Power plant with a constant electrical power output, method for providing a constant electrical power output by using the power plant and method for designing a battery for the power plant**

(57)     Power plant with a constant electrical power output, method for providing a constant electrical power output by using the power plant and method for designing a battery for the power plant

Concerning the invention a power plant is presented for providing a total electrical power output during a delivery period. In addition, a method for providing a constant electrical power output by using the power plant is provided. The power plant comprises at least one tidal power generator for providing a tidal electrical power output during the delivery period and at least one energy storage system for providing a storage electrical output during the delivery period, wherein the total electrical power output is a result of a combination of the tidal electrical power output and the storage electrical power output. The power plant comprises a tital power plant. A minimum of the total electrical power output of the power plant can be guaranteed. The resulting electrical power output is constant during the delivery period (e.g. day or month). Moreover method for designing a battery for the power plant is presented. For this method at least one sizing method for sizing the battery is used which is selected from the group consisting of heuristic battery sizing, simulation based battery sizing and optimization based battery sizing.

FIG 1

**Description**

BACKGROUND OF THE INVENTION

1. FIELD OF THE INVENTION

The present invention refers to power plant with a constant electrical power output, a method for providing a constant electrical power output by using the power plant and method for designing a battery for the power plant.

2. DESCRIPTION OF THE RELATED ART

A stable power system requires energy sources (power plants) that reliably and predictably generate electrical power (electricity). Additionally, stable power systems need a significant amount of units providing primary control power (PCP) for stabilization of a grid of the power system, e.g. for stabilization of a grid frequency.

Traditionally, both reliable power generation and PCP are provided by steam or gas power plants fueled by fossil or nuclear fuels. The advantage of such traditional power plants is their reliable energy supply (electrical power output) which enables them to quickly vary power generation within the physical limits of the respective traditional power plant.

However, these traditional power plants rely on fossil/nuclear energy sources. In view of the environmental impact of the use of these energy sources it is desirable to reduce the usage of these traditional power plants.

SUMMARY OF THE INVENTION

It is an object of the invention to provide a power plant with a reliable electrical power output.

This object is achieved by the invention specified in the claims.

Concerning the invention a power plant is presented for providing a total electrical power output during a delivery period. The power plant comprises at least one tidal power generator for providing a tidal electrical power output during the delivery period and at least one energy storage system for providing a storage electrical output during the delivery period, wherein the total electrical power output is a result of a combination of the tidal electrical power output and the storage electrical power output. The power plant comprises a tidal power plant.

In addition, a use of the power plant is provided, wherein the total electricity output of the power plant during the delivery period results from the combination of the tidal electrical power output during the delivery period and the storage electrical power output during the delivery period. Preferably, the total electrical power output remains essentially constant during the delivery period. Essentially constant includes deviations of the total electrical power output of up to 10%, e.g. 5%. During the delivery period a stable (constant, steady) electrical power output can be guaranteed. With the aid of the power plant, a minimum total electrical power output during the delivery period is guaranteed.

The delivery period is a specific time frame in which the total electrical power is delivered to a grid, e.g. public grid. The delivery period can have different temporal lengths. For instance, the temporal length comprises hours or days.

The tidal power generator of a power plant converts energy of tides into electrical power (tidal electrical power). Tidal energy varies throughout a day and throughout a month (delivery periods). Hence, the tidal electrical power output during a specific time frame varies, too. The tidal electrical power output during the specific timeframe is not constant. Hence, variations of the tidal electrical power output result. The variations refer to the water speed of the tidal as well as the direction of the water flow of the tidal.

The energy storage system balances these variations during the delivery period. This is very useful especially in the time frame of reversion of the direction of the water flow. Here, the direction of the water flow changes as well as the speed of the water flow. This critical time frame takes about 2 h. In this time frame variations of the tidal electrical output power are compensated by the storage electrical power output.

The result of this compensation is an essentially constant total electrical power output. Essentially constant means, that deviations of up to 10% of an average total electrical power output are possible.

The energy storage system is an energy exchange system: Energy can be stored (the energy storage system can be charged) and can be delivered (the energy storage system can be discharged). In order to reach the aim of constant total electrical power output a discharging of the energy storage system from stored energy is carried out during the delivery period.

Electrical power can be stored and released directly via an electrical storage system (electrical energy storage system, EES), e.g. a battery. Alternatively or in combination with EES, the energy can be stored in other forms of energy, e.g. thermal energy. This form of energy is converted into electrical power during the delivery period.

The combination of the tidal electrical power output and the storage electrical power output during the delivery period is preferably the sum of the tidal electrical power output and storage electrical power output. The storage electrical power output is added to the tidal electrical power output. The result is the total electrical power output of the power plant. This total electrical power output is delivered to a grid during the delivery period. Thereby, an amount of the storage electrical power output depends on the amount of the tidal electrical power output. With the aid of the storage electrical power output variations of the tidal electrical power output can be compensated.

It hast o be noted that the amount of the storage electrical power output can be zero. The tidal electrical power output is equal to the total electrical power output. The result is an essentially constant total electrical power output of the power plant which is delivered to the grid.

As mentioned above, different kinds of energy storage systems are possible, e.g. thermal energy storage systems. In a preferred embodiment, the energy storage system comprises at least one electrical energy storage system. The electrical energy storage system is able to store and to release electrical power. Thereby, electrical energy can be stored directly or indirectly (as described above).

In a preferred embodiment, the electrical energy storage system comprises at least one electrochemical energy storage system. With the aid of such a system, electrical energy can be converted into chemical energy and vice versa by an electrochemical reaction. For instance, electrical energy can be stored electrochemically via hydrogen or methane (fuels). These fuels can be converted back into electrical energy with the aid of a fuel cell.

Preferably, the electrochemical energy storage system comprises at least one battery. In order to increase the storage capacity of the energy storage system a number of batteries are possible. For instance, the battery is a lithium-ion battery, a lead battery or a Vanadium redox 'Flow battery. Batteries have the advantage that they are quite simple, relatively cheap and very reliable. Moreover, with the aid of batteries electrical energy can be stored and can be released directly. Additional conversion steps, e.g. from electrical energy into chemical energy, are not necessary. By that, loss of energy originating from conversion steps can be avoided.

For the function of the power plant it is necessary that the energy storage system has enough storage capacity for the compensation of the variation of the tidal energy power output. In order to use the storage capacity, it is necessary to charge the energy storage system. For the charging any electrical energy source can be used. Very advantageous is the use of the tidal power generator. Electrical power of the tidal generator is used for the charging of the energy storage system. No additional source for charging energy is necessary.

Preferably, excess electricity of the tidal power generator is used for the charging of the energy storage system.

Preferably, a charging of the energy storage system is carried out during a charging period. The charging period and the power delivery period can overlap. So, the delivering of the total electrical power to a grid and a charging of the energy storage system are carried out simultaneously.

In a preferred embodiment, the charging is carried out during charging period with absence of a reversion of a flow direction of tidal flow. In such a charging period a water speed of the flowing water is quite high. Due to the high water speed in such a time frame the tidal electrical power output is quite high. There is electricity excess provided by the tidal power generator. This electricity excess can be used for the charging of the energy storage system. The charging of the energy storage system is preferably performed in periods in which excess energy, e.g. excess electricity, is available. This excess energy is storable energy or is converted into storable energy. The storable energy can be stored with the aid of the energy storage system.

An additional aspect of the invention refers to a method for designing the storage capacity of the energy storage system, especially to a method for designing a storage capacity of a battery for the energy storage system of the power plant. Thereby, at least one sizing method for sizing the battery is used which is selected from the group consisting of heuristic battery sizing, simulation based battery sizing and optimization based battery sizing. Mixtures of these different methods are possible, too.

The heuristic battery sizing is based on experience. This method can be carried out as follows: First of all, the maximal possible factor x is limited by the average tidal electrical power generation of the day with the lowest tidal electrical power generation within the full moon cycle, Pavq,neap. Energetically, following equation is given:

$$x \leq \frac{\text{Pavg,neap}}{\text{Pmax,neap}} \qquad (Gl. \ 1)$$

Requirement: No energy is stored over several days. Typically, x will be even lower, depending on battery efficiency and number of battery charging cycles.

Battery power: For a given x, the battery should have a power Of at least $P_{bat} = P_{max,neap} - P_{guarantee} = (1-x) * P_{max,neap}$ SO that it can store all power generates during a neap tide.

Calculation of battery capacity $E_{bat}$: During the day with the lowest energy generation within the full moon cycle, there is a total amount of $t_{nogeneration}$ hours of no generation. The capacity of the battery must be large enough to provide the guaranteed feed-in during the full duration of no generation: $E_{bat} = t_{no\ generation} * P_{guarantee}$

An alternative way of determining battery capacity is to use a simulation tool. The simulation tool is fed with the actual generated power time series and simulates the charging and discharging of a battery with power $P_{bat}$ as determined above or according to a different formula and assumed capacity $E_{bat,assumed}$. We start with a very low capacity $E_{bat,assumed}$, which will lead to the simulated battery violating its lower limit, i.e. it will run empty. We then increase $E_{bat,assumed}$ and rerun the simulation until no battery limit is violated anymore. This $E_{bat,assumed}$ is then the needed battery capacity $E_{bat}$.

The optimization based battery sizing has the goal to get an optimal solution for the battery design. The simulation can be based on optimization of the investment costs. Here, we assume costs for battery power $p_{power}$ and battery capacity $P_{capacity}$ and minimize the following problem:

$$\min(p_{power}*p_{bat} + p_{capacity}*E_{bat}) \qquad (Gl. \ 2)$$

That is the optimization problem determines a combination of battery power and capacity that will solve our storage problem without violating physical constraints like the state of charge of the battery, and which will require the smallest investment costs. This approach can be extended to a more complex optimization of lifecycle costs.

Additionally, it is possible to offer PCP during the two weeks of high tide (spring tide) without increasing the size of the used battery. The amount of PCP that can be offered during these times can be calculated by taking into account the surplus energy (power exceeding guaranteed).

Summarizing the advantages of the invention result in follows:

- A tidal power generation system is coupled with an electrical energy storage to guarantee a minimum power feed-in from the full system.

- Based on the specific properties of tidal power generation a method is derived for calculating the size of the necessary energy storage such that a minimal storage capacity is needed.

- An alternative method is offered for sizing the energy storage such that total investment or lifecycle costs are minimized.

BRIEF DESCRIPTION OF THE DRAWINGS

Further features and advantages of the invention are produced from the description of exemplary embodiments with reference to the drawings. The drawings are schematic.

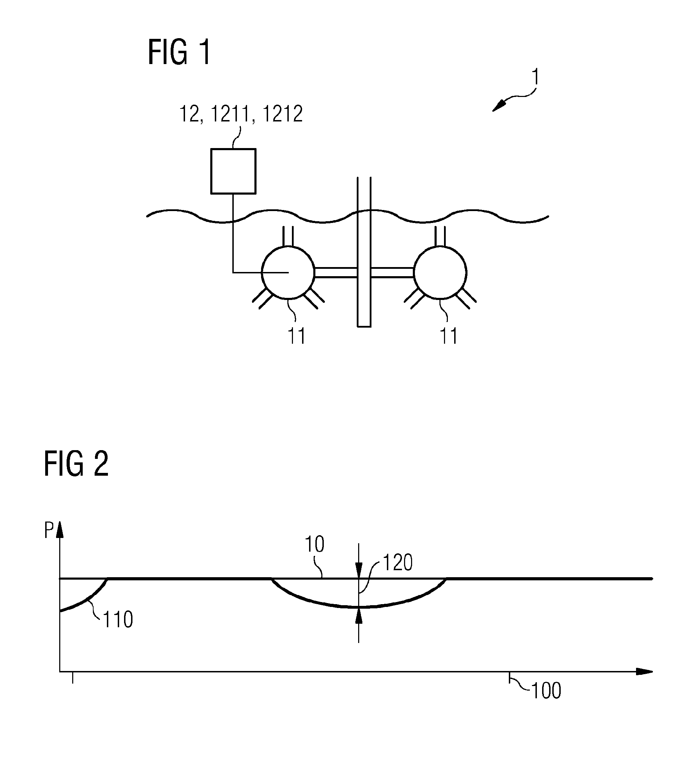

Figure 1 shows a power plant.

Figure 2 shows changing of power outputs depending on time.

Figure 3 shows the result of a simulation of the complete system over a period of a month.

Given is a tidal power plant 1 for providing a total electrical power output 10 during a delivery period 100. The power plant 1 comprises two tidal power generators 11 for providing a tidal electrical power output 110 during the delivery period 100 and at least one energy storage system 12 for providing a storage electrical output 120 during the delivery period 100.

The total electrical power output 10 is a result of a combination of the tidal electrical power output 110 and the storage electrical power output 120. The storage electrical power output is added to the tidal electrical power output 110. By this, a minimum total electrical power output is guaranteed.

The electrical storage is a battery. For the designing the storage capacity of the battery a heuristic sizing method is used. The battery power $P_{bat}$ calculated as follows (for one tidal power generator of 2 MW:

$$P_{rated,TPG} = 2000 \ kW$$

$$P_{max,neap} = 500 \ kW$$

$$P_{avg,neap} = 126 \ kW$$

X =20% (to be conservative w.r.t. losses)

$$P_{bat} = (1-x) \ * \ P_{max,neap} = 400 \ kW$$

For instance, at a specific site, a maximal time without generation of 6 hours is postulated. For the guaranteed total electrical power output of 100 kW, this yields $E_{bat}$ = 600 kWh.

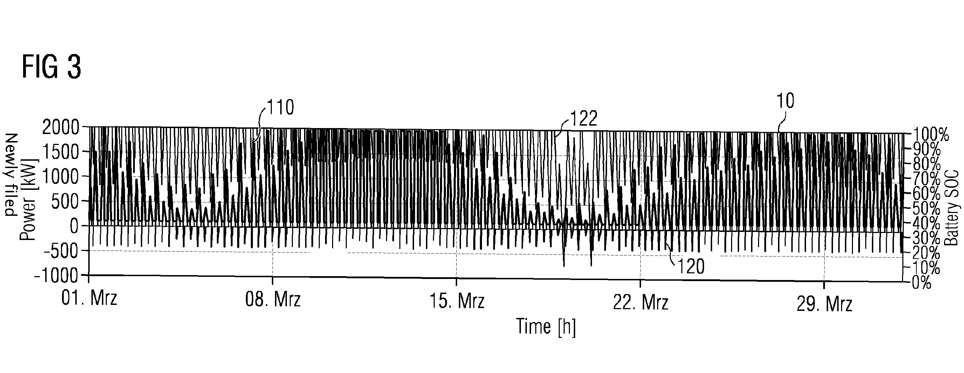

By using a simulation tool in order to validate that a battery with these parameters can provide the guaranteed power without ever running out of charge. The resulting time series over the whole month is shown in figure 3.

Here, the delivery period 100 is about one month. The development of the electrical output 110, the development of the energy electrical power output 120 can be seen. In addition, the state of charge 122 of the battery is shown. During the complete delivery period the total electrical power output is constant.

**Claims**

1.  Power plant (1) for providing a total electrical power output (10) during a delivery period (100); the power plant (1) comprises:

    - at least one tidal power generator (11) for providing a tidal electrical power output (110) during the delivery period (100) ; and
    - at least one energy storage system (12) for providing a storage electrical output (120) during the delivery period (100) ;

    wherein

    - the total electrical power output (10) is a result of a combination of the tidal electrical power output (110) and the storage electrical power output (120).

2.  Power plant according to claim 1, wherein the energy storage system (12) comprises at least one electrical energy storage system (121).

3.  Power plant according to claim 2, wherein the electrical energy storage system (121) comprises at least one electrochemical energy storage system (1211).

4.  Power plant according to claim 3, wherein the electrochemical energy storage system (1211) comprises at least one battery (1212).

5.  Power plant according to one of the claims 1 to 4, wherein the electrical energy storage system (121) can be charged by electricity of the tidal power generator (11).

6.  Method for providing a total electrical power output (10) during a delivery period (100) by using a power plant (1) according to one of the claims 1 to 5, wherein the total electricity output (10) of the power plant (1) during the delivery period (100) results from the combination of the tidal electrical power output (110) during the delivery period (100) and the storage electrical power output (120) during the delivery period (100).

7.  Method according to claim 6, wherein the total electrical power output remains essentially constant during the delivery period (100).

8.  Method according to claim 6 or 7, wherein a minimum total electrical power output (10) during the delivery period is guaranteed.

9.  Method according to one of the claims 6 to 8, wherein a discharging of the energy storage system (12) from stored energy during the delivery period (100) is carried out.

**10.** Method according to claim 9, wherein the discharging is carried out during a delivery period with a reversion of a flow direction of tidal flow.

**11.** Method according to one of the claims 6 to 10, wherein a charging of the energy storage system is carried out during a charging period.

**12.** Method according to claim 11, wherein the charging is carried out during charging period with absence of a reversion of a flow direction of tidal flow.

**13.** Method according to claim 11 or 12, wherein for the charging of the energy storage system electrical power of the tidal generator (11) is used.

**14.** Method for designing a storage capacity of a battery for the energy storage system of the power plant according to one of the claims 1 to 5, wherein at least one sizing method for sizing the battery is used which is selected from the group consisting of heuristic battery sizing, simulation based battery sizing and optimization based battery sizing.

FIG 1

1

12, 1211, 1212

11          11

FIG 2

P

10          120

110

100

EP 3 001 528 A1

FIG 3

Europäisches
Patentamt

European
Patent Office

Office européen
des brevets

# EUROPEAN SEARCH REPORT

Application Number

EP 14 18 6820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/200156 A1 (WELLER CHUCK [US]) 9 August 2012 (2012-08-09) * paragraphs [0018] - [0020], [0033] - [0035]; figures 1,2 * ----- | 1-6,14 | INV. H02J3/32 H02J3/38 F03B13/26 |
| X | WO 2014/049269 A1 (COMMISSARIAT ENERGIE ATOMIQUE [FR]) 3 April 2014 (2014-04-03) * page 11, line 20 - page 14, line 28; figures 1-3 * ----- | 1,6-14 | |
| X | KR 101 322 449 B1 (MAXCOM CO LTD [KR]) 28 October 2013 (2013-10-28) * abstract; figures 3-7 * ----- | 1,6,14 | |
| | | | TECHNICAL FIELDS SEARCHED (IPC) |
| | | | F03B H02J |

The present search report has been drawn up for all claims

| Place of search | Date of completion of the search | Examiner |
|---|---|---|
| Munich | 3 March 2015 | Colombo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 6820

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2015

| Patent document cited in search report | | Publication date | Patent family member(s) | | Publication date |
|---|---|---|---|---|---|
| US 2012200156 | A1 | 09-08-2012 | US 2012200156 A1<br>US 2013313829 A1 | | 09-08-2012<br>28-11-2013 |
| WO 2014049269 | A1 | 03-04-2014 | FR 2996032 A1<br>WO 2014049269 A1 | | 28-03-2014<br>03-04-2014 |
| KR 101322449 | B1 | 28-10-2013 | NONE | | |

EPO FORM P0459

For more details about this annex : see Official Journal of the European Patent Office, No. 12/82